# EUROPEAN PATENT SPECIFICATION

(11) **EP 3 650 727 B1**
(45) Date of publication and mention of the grant of the patent: **30.12.2020**
(21) Application number: 19207582.8
(22) Date of filing: 07.11.2019
(51) Int. Cl.: F16D 65/097

(54) **PAD WITH VARIABLE-ELASTICITY FRICTION ELEMENTS FOR DISC BRAKES FOR RAILWAY VEHICLES**
BELAG MIT REIBELEMENTEN MIT VARIABLER ELASTIZITÄT FÜR SCHEIBENBREMSEN FÜR SCHIENENFAHRZEUGE
PLAQUETTE COMPORTANT DES ÉLÉMENTS DE FROTTEMENT À ÉLASTICITÉ VARIABLE POUR FREINS À DISQUE DE VÉHICULES FERROVIAIRES

(30) Priority: 12.11.2018 IT 201800010235
(43) Date of publication of application: 13.05.2020
(73) Proprietor: Cofren S.r.L., 83100 Avellino (IT)
(72) Inventor: DE SOCCIO, Vittorio, 82100 Benevento (IT)
(74) Representative: Bosman, Cesare

(56) References cited:
- EP-A1- 2 730 798
- EP-A1- 3 059 466
- WO-A1-02/073059
- WO-A1-2006/002903
- DE-A1-102015 109 034

## Description

### CROSS-REFERENCE TO RELATED APPLICATIONS

This patent application claims priority from Italian patent application no. 102018000010235 filed on November 12, 2018.

### TECHNICAL FIELD

The invention relates to a pad for disc brakes for railway vehicles.

### BACKGROUND OF THE INVENTION

As it is known, disc brakes are subjected to great stresses and, in order to obtain an ideal braking action, there has to be a good transmission of the braking force from the pad to the disc.

For a long time now manufacturers have been using pads comprising a plurality of small-sized friction elements, instead of one single large-sized friction element. According to one of the solutions adopted to this regard, each pad substantially consists of a main base plate and of a plurality of friction elements, which are fixed to the base plate in a reversible manner. Each one of the friction elements consists of a metal sheet and of a friction button, which is fixed to the metal sheet in an irreversible manner.

Pads for disc brakes for railway vehicles, besides having to exert an effective pressure upon the disc in terms of braking, also have to ensure a low noise during the braking action. Low noise has increasingly become a discriminating factor in the choice of the disc brakes to be used.

As a person skilled in the art can immediately understand, the requests discussed above are strictly linked to the components with which the pads are manufactured and to the ways in which the friction elements exert a pressure upon the disc.

For a long time a solution has been known, which involves the use of a plurality of elastic elements, each arranged between the base plate and a respective friction element. According to this solution, the elastic elements of a same pad are all the same, thus without taking into account the different temporary deformations of the disc in the different areas at a variable radial speed.

Even though this solution led to a significant improvement in terms of noise reduction during braking, however, in the railway industry there is a strong need for a further noise decrease.

The inventor of this invention offers a particular pad solution, whose technical features are such as to ensure a further decrease in the braking noise, allowing, at the same time, for a high braking efficiency An example of a brake pad belonging to the state of the art is disclosed in EP 3 059 466 A1.

### SUMMARY OF THE INVENTION

The subject-matter of the invention is a pad for disc brakes for railway vehicles, whose essential features are set forth in claim 1, and whose preferred and/or auxiliary features are set forth in claims 2-7.

### BRIEF DESCRIPTION OF THE DRAWINGS

The invention will be best understood upon perusal of the following description of an embodiment, provided by way of mere explanatory, non-limiting example, with reference to the figures of the accompanying drawings, wherein:

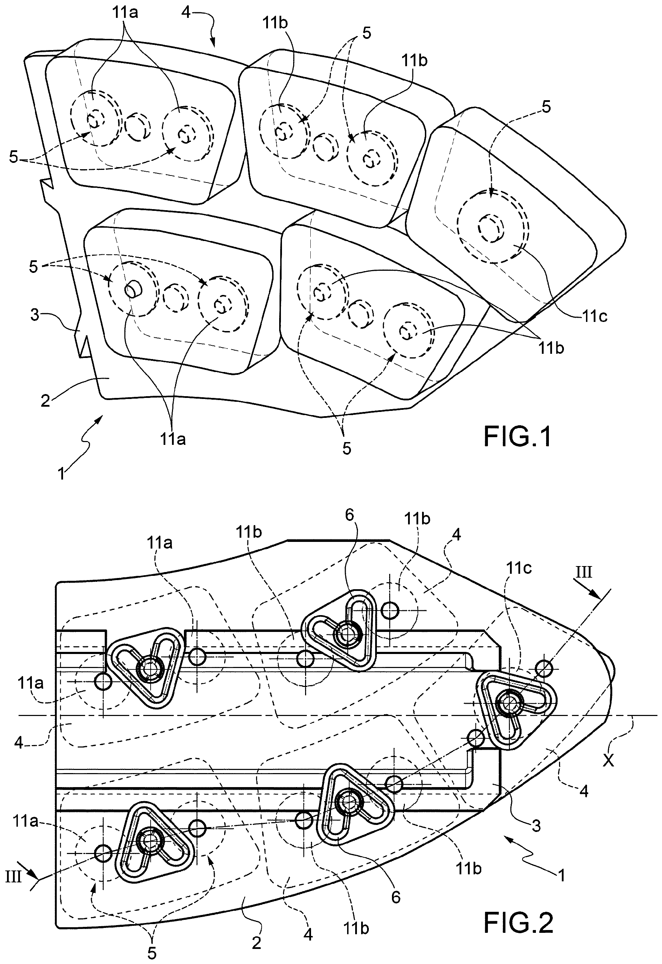

figure 1 is a perspective view from the top, with transparent parts for greater clarity, of the pad according to the invention;
figure 2 is a view from the bottom, with transparent parts, of the pad of figure 1;
figure 3 is a cross section according to line III-III of figure 2.

### DETAILED DESCRIPTION OF THE INVENTION

In the accompanying figures, number 1 indicates, as a whole, a pad according to the invention.

The pad 1 comprises a base plate 2 comprising, on a rear surface, a "dovetail" fixing element 3 to fix the pad 1 to a structure of the disc brake, a plurality of friction elements 4 fixed to the base plate 2 in a reversible manner and arranged so as to exert a pressure upon the disc of the brake in order to carry out the action of the brakes, one or more spacers 5 arranged between the friction element 4 and the base plate 2, and a locking spring 6, which is designed to lock a respective friction element 4 to the base plate 2 in a reversible manner, as explained more in detail below.

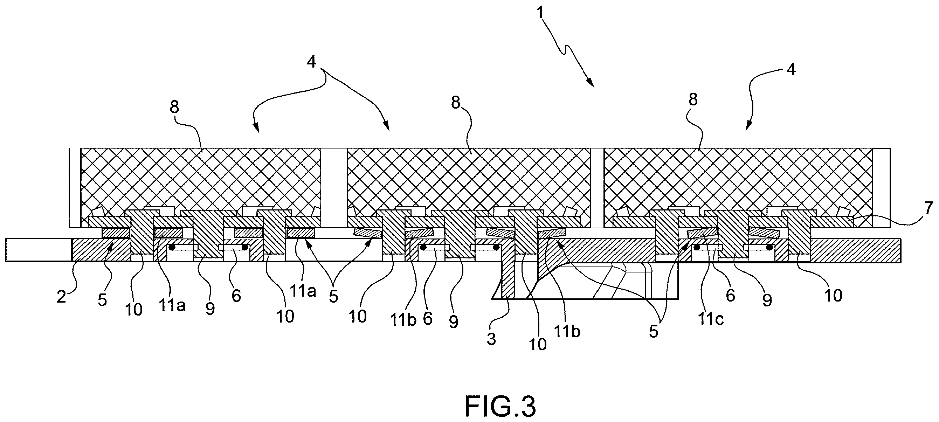

According to figure 3, each one of the friction elements 4 consists of a metal sheet 7 and of a button 8, which is made of a friction material and is fixed to the metal sheet 7 in an irreversible manner by means of a fixing pin 9. Two anti-rotation pegs 10 project from the metal sheet 7 and are arranged on opposite sides relative to said fixing pin 9.

A circumferential groove is obtained in the fixing pin 9 and is designed to be engages by the locking spring 6.

According to figure 3, in the base plate 2, in the area of each one of the fixing portions of the friction elements 4, there are three through holes, through which the friction elements 5 are coupled to the base plate 2. In particular the three through holes are a central hole and two side holes. The central hole has a larger diameter than the side holes.

When the pad 1 is assembled, the fixing pin 9 engages the central hole, where it is locked by the action of a respective locking spring 6, whereas each one of the two anti-rotation pegs 10 engages a respective side hole.

More specifically, the pad shown in the accompanying figures comprises five friction elements 4 arranged in a non-linear manner along a longitudinal extension axis X of the pad.

Some of the spacer elements 5 have evident elastic properties and have a different elasticity. In particular, the spacer elements 5 of the pad shown in the accompanying figures comprise: four disc elements 11a arranged so as to surround four respective anti-rotation pegs 10 of two respective friction elements 5 placed in the rear portion of the pad; four Belleville washers 11b arranged so as to surround four respective anti-rotation pegs 10 of two respective friction elements 5 placed in a middle portion of the pad; and a Belleville washer 11c arranged so as to surround a respective fixing pin 9 of a respective friction element 5 placed in the front portion of the pad. In particular, the Belleville washer 11c has a greater elasticity than the two Belleville washers 11b.

Owing to the above, it is evident that the solution according to the invention lies in the different pressure (different elasticity of the spacer elements) with which the friction elements of a same pad act upon the disc of the brake.

The inventor of this invention surprisingly found out that a pad comprising friction elements that act upon the disc of the brake with a different pressure produces an extremely low braking noise, without jeopardizing in any way the efficiency of the braking action.

Even though it has been proved that a noise reduction effect can be obtained using spacer elements with a different elasticity, regardless of their order, however, it has also been proved that an even more remarkable effect can be obtained when the spacer elements 5 of the pad vary their elasticity in a continuous manner along the longitudinal axis X.

Indeed, according to the example described above, the elasticity of the spacer elements 11a, 11b and 11c varies with continuity, increasing from the rear portion to the front portion of the pad.

In the pad of the example shown herein, the rear portion is the one acting upon the central part of the brake, whereas the front portion is one the acting upon a more peripheral part of the disc of the brake.

Finally, it has been proved that, when the friction elements of a pd have degrees of freedom in their movement, further improvements can be obtained both in terms of braking effectiveness and in terms of noise. For this reason the presence of Belleville washers is preferred. Belleville washers have a shape that is such as to allow the friction element to move around the vertex of the convex portion of the washer itself.

To this regard, it has also been proved that, when the friction elements of a same pad have different degrees of freedom of movement, further improvements can be obtained in terms of noise. For this reason, the pad of the example comprises two friction elements, which, for they are each associated with two Belleville washers 11b, have greater degrees of freedom of movement than the two friction elements associated with the two discs 11a, and a friction element, which, for it is associated with one single Belleville washer 11c, has greater degrees of freedom of movement than the two friction elements associated with the two Belleville washers 11b.

## Claims

1. A pad (1) for disc brakes for railway vehicles comprising a base plate (2), a plurality of friction elements (4), which are fixed to the base plate (2) in a reversible manner, and a plurality of spacer elements (5), each arranged between a respective friction element (4) and the base plate (2); said pad being **characterized in that** at least part of said spacer elements (5) have a different intrinsic elasticity among them.

2. A pad (1) according to claim 1, **characterized in that** said spacers change their elasticity in a continuous manner along a longitudinal extension axis X of the pad.

3. A pad (1) according to claim 1 or 2, **characterized in that** said spacers progressively increase their elasticity along the axis X from a rear portion to a front portion of the pad.

4. A pad (1) according to one of the preceding claims, **characterized in that** at least part of the spacers (5) are Belleville washers (11b, 11c).

5. A pad according to one of the preceding claims, **characterized in that** each one of the friction elements 4 consist of a metal sheet (7) and a button (8), which is made of a friction material and is fixed to the metal sheet (7) by means of a fixing pin (9); two anti-rotation pegs (10) projecting from said metal sheet (7) and being arranged on opposite sides relative to said fixing pin (9); each one of said spacer elements (5) having a central hole, which is engaged by said fixing pin (9) and/or by said anti-rotation pegs (10).

6. A pad according to claims 4 and 5, **characterized in that** only part of the spacers (5) consist of Belleville washers (11b, 11c).

7. A pad according to claim 6, **characterized in that** it comprises friction elements (4), each associated with two Belleville washers (11b), whose central hole is engaged by said anti-rotation pegs (10), and friction elements (4), each associated with one single Belleville washer (11c), whose central hole is engaged by said fixing pin (9).

## Patentansprüche

1. Belag (1) für Scheibenbremsen für Eisenbahnfahrzeuge mit einer Grundplatte (2), mehreren Reibeelementen (4), die an der Grundplatte (2) reversibel befestigt sind, und mehreren Abstandselementen (5), die jeweils zwischen einem entsprechenden Reibungselement (4) und der Grundplatte (2) angeordnet sind, wobei der Belag **dadurch gekennzeichnet ist, dass** mindestens ein Teil der Abstandselemente (5) verschiedene Eigenelastizitäten hat.

2. Belag (1) nach Anspruch 1, **dadurch gekennzeichnet, dass** sich die Elastizität der Abstandselemente entlang einer Längserstreckungsachse X des Belags kontinuierlich ändert.

3. Belag (1) nach Anspruch 1 oder 2, **dadurch gekennzeichnet, dass** die Elastizität der Abstandselemente entlang der X-Achse von einem hinteren Abschnitt zu einem vorderen Abschnitt des Belags progressiv zunimmt.

4. Belag (1) nach einem der vorstehenden Ansprüche, **dadurch gekennzeichnet, dass** mindestens ein Teil der Abstandselemente (5) Tellerfedern (11b, 11c) sind.

5. Belag (1) nach einem der vorstehenden Ansprüche, **dadurch gekennzeichnet, dass** jedes der Reibungselemente (4) aus einer Metallfolie (7) und einem Knopf (8), der aus einem Reibungsmaterial besteht und an der Metallfolie (7) mithilfe eines Befestigungsstifts (9) befestigt ist, besteht, wobei zwei Antirotationszapfen (10) von der Metallfolie (7) vorstehen und an gegenüberliegenden Seiten bezüglich des Befestigungsstifts (9) angeordnet sind, wobei jedes der Abstandselemente (5) ein Mittelloch aufweist, das mit dem Befestigungsstift (9) und/oder mit den Antirotationszapfen (10) in Eingriff ist.

6. Belag nach Anspruch 4 und 5, **dadurch gekennzeichnet, dass** nur ein Teil der Abstandselemente (5) aus Tellerfedern (11b, 11c) besteht.

7. Belag nach Anspruch 6, **dadurch gekennzeichnet, dass** er aufweist: Reibungselemente (4), die jeweils mit zwei Tellerfedern (11b) verbunden sind, deren Mittelloch mit den Antirotationszapfen (10) in Eingriff ist, und Reibungselemente (4), die jeweils mit einer einzelnen Tellerfeder (11c) verbunden sind, deren Mittelloch mit dem Befestigungsstift (9) in Eingriff ist.

## Revendications

1. Plaquette (1) pour des freins à disque pour des véhicules ferroviaires comprenant une plaque de base (2), une pluralité d'éléments de frottement (4) qui sont fixés à la plaque de base (2) d'une manière réversible, et une pluralité d'éléments d'espacement (5), agencés chacun entre un élément de frottement (4) respectif et la plaque de base (2) ; ladite plaquette étant **caractérisée en ce qu'**au moins une partie desdits éléments d'espacement (5) présente une élasticité intrinsèque différente parmi eux.

2. Plaquette (1) selon la revendication 1, **caractérisée en ce que** lesdits éléments d'espacement changent leur élasticité d'une manière continue le long d'un axe d'extension longitudinale X de la plaquette.

3. Plaquette (1) selon la revendication 1 ou 2, **caractérisée en ce que** lesdits éléments d'espacement augmentent progressivement leur élasticité le long de l'axe X depuis une portion arrière à une portion avant de la plaquette.

4. Plaquette (1) selon l'une des revendications précédentes, **caractérisée en ce qu'**au moins une partie des éléments d'espacement (5) est constituée par des rondelles Belleville (11b, 11c).

5. Plaquette selon l'une des revendications précédentes, **caractérisée en ce que** chacun des éléments de frottement 4 se compose d'une feuille métallique (7) et d'un bouton (8) qui est réalisé en un matériau de frottement et est fixé à la feuille métallique (7) au moyen d'une broche de fixation (9) ; deux chevilles anti-rotation (10) faisant saillie de ladite feuille métallique (7) et étant agencées sur des côtés opposés relatifs à ladite broche de fixation (9); chacun desdits éléments d'espacement (5) présentant un trou central, qui est mis en prise par ladite broche de fixation (9) et/ou par lesdites chevilles anti-rotation (10).

6. Plaquette selon les revendications 4 et 5, **caractérisée en ce qu'**une seule partie des éléments d'espacement (5) se compose de rondelles Belleville (11b, 11c).

7. Plaquette selon la revendication 6, **caractérisée en ce qu'**elle comprend des éléments de frottement (4), associés chacun à deux rondelles Belleville (11b), dont le trou central est mis en prise par lesdites chevilles anti-rotation (10), et des éléments de frottement (4), associés chacun à une seule rondelle Belleville (11c), dont le trou central est mis en prise par ladite broche de fixation (9).
